# EUROPÄISCHE PATENTANMELDUNG

(11) **EP 4 715 502 A1**
(43) Veröffentlichungstag der Anmeldung: **25.03.2026**
(21) Anmeldenummer: 24202266.3
(22) Anmeldetag: 24.09.2024
(51) Int. Cl.: G05B 19/404

(54) **REGELUNG EINER TECHNISCHEN GRÖSSE MIT REGELUNGSKASKADE**

(71) Anmelder: Siemens Aktiengesellschaft, 80333 München (DE)
(72) Erfinder: Ebersberger, Vincent, 90513 Zirndorf (DE); Richter, Thomas, 90587 Obermichelbach (DE); Zimmermann, Roland, 91052 Erlangen (DE)
(74) Vertreter: Siemens Patent Attorneys

(57) **Zusammenfassung**

Die Erfindung betrifft ein Verfahren zur Regelung einer technischen Größe, aufweisend die Schritte Bereitstellen einer Regelungskaskade mit zumindest einem Stromregler im Innersten der Regelungskaskade und Eingreifen einer Drehmoment-Vorsteuerung am Eingang des Stromreglers, wobei ein Beschleunigungsmoment-Anteil und/oder ein Reibmoment-Anteil vorsteuerbar ist und ein ermittelter externer Drehmoment-Anteil vorgesteuert wird, wobei der externe Drehmoment-Anteil mindestens eine prozess-bedingte, zyklische Störung vorsteuert.

## Beschreibung

Die Erfindung betrifft ein Verfahren zur Regelung einer technischen Größe mit einer Regelungskaskade mit zumindest einem Stromregler im Innersten der Regelungskaskade, sowie eine zugehörige Steuerungseinheit.

Es ist eine essenzielle Anforderung für Produktionsmaschinen, Antriebe mit hoher Genauigkeit zu betreiben, um qualitativ hochwertige Produkte zu fertigen. Maschinenantriebe müssen daher sehr genau arbeiten, um die gewünschten Positionen, Geschwindigkeiten und Beschleunigungen einzuhalten. Es kommen dafür umrichterbetriebene Motoren zum Einsatz für hohe erreichbare Genauigkeiten. Selbst bei den hohen Geschwindigkeiten und einhergehenden Steigerung der Produktivität besteht die Anforderung die notwendige Präzision einzuhalten. Hierzu werden in den Antriebssteuerungen kaskadierte Regelungen wie Stromregler, Geschwindigkeitsregler und Positionsregler eingesetzt. Insbesondere bei hochdynamischen Bewegungen und unter dem Einfluss externer Störeinflüsse, wie dem Eintauchen eines Schneidwerkzeugs in Material oder mechanischen Stößen, kann es jedoch zu Abweichungen zwischen Soll- und Istposition kommen. Diese Abweichungen beeinträchtigen die Produktqualität und die Effizienz des Produktionsprozesses.

Da Regelungen immer reaktiv sind, werden oft zusätzliche Vorsteuerungen wie Reibmomentvorsteuerung und Beschleunigungsmomentvorsteuerung integriert. Diese bekannten Störungen können somit vorab kompensiert werden, wodurch der Regler entlastet wird und sich auf unvorhergesehene Störungen konzentrieren kann.

Vor diesem Hintergrund ist es eine Aufgabe der vorliegenden Erfindung ein Verfahren und eine Steuerungseinheit bereitzustellen, die in einer angetriebenen Maschine sowohl unter variierenden Betriebsbedingungen als auch bei externen Störeinflüssen eine Abweichung zwischen Soll- und Istposition minimieren. Diese Aufgabe wird durch die Merkmale der unabhängigen Ansprüche gelöst. Vorteilhafte Ausgestaltungen sind in den abhängigen Ansprüchen angegeben.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Regelung einer technischen Größe, aufweisend die folgenden Schritte:
- Bereitstellen einer Regelungskaskade mit zumindest einem Stromregler im Innersten der Regelungskaskade,
- Eingreifen einer Drehmoment-Vorsteuerung am Eingang des Stromreglers, wobei ein Beschleunigungsmoment-Anteil und/oder ein Reibmoment-Anteil vorsteuerbar sind und ein ermittelter externer Drehmoment-Anteil vorgesteuert wird, wobei der externe Drehmoment-Anteil mindestens eine prozess-bedingte, zyklische Störung vorsteuert.

Stellgrößen wie beispielsweise die Position oder Geschwindigkeit werden für einen elektrischen Antrieb in ein Solldrehmoment gewandelt. Dieses Drehmoment ist dann direkt proportional zu dem benötigten Strom des Antriebes. Neben einem antriebsspezifischen Strom, welcher das elektrische Feld aufrecht hält, wird das elektromagnetische Drehfeld mit einer Spannung und Frequenz bestimmt. Bei zu jedem Zeitpunkt passend vorgegebenem Solldrehmoment wird der Motor zu jedem Zeitpunkt mit der richtigen Position und Geschwindigkeit verfahren.

Das Drehmoment unterliegt jedoch verschiedenen Einflussfaktoren wie beispielsweise der Beschleunigung, der Reibung und externen Effekten.

Externe Effekte, die sich aus einem Prozess ergeben, in dem die zu regelnde technische Größe eingesetzt wird, und die zyklisch auftreten, stellen eine Störung dar. Diese Daten liegen einer Steuerung des Antriebs, beispielsweise einer PLC, nicht vor. Sie haben überdies spezifische Abhängigkeiten vom Prozess. Wird beispielsweise eine Prozessgeschwindigkeit geändert hat dies ebenfalls eine Auswirkung auf die zu regelnde technische Größe.

Durch die Berücksichtigung der externen Effekte, die prozess-spezifisch und zyklisch sind, wird die technische Größe, insbesondere mittels des Stromreglers und einem vorgesehenen Antrieb, vorteilhafterweise zu jeder Zeit im korrekten Betriebspunkt verfahren.

Es kann je nach Anwendungen nur der externe Drehmoment-Anteil oder der externe Drehmoment-Anteil sowie Beschleunigungsmoment-Anteil und/oder ein Reibmoment-Anteil vorgesteuert werden. In Anwendungen, in denen ein Anwender eine Reibmomentvorsteuerung in einer anderen Einheit nutzt, beispielsweise in einer Antriebssteuerung, die zusätzlich zu einer übergeordneten Steuereinheit vorgesehen sein kann, ist zu beachten, dass dieses Signal nicht doppelt vorgesteuert wird.

Beispielsweise wird im Regelungskonzept vorgesehen, dass das Ist-Drehmoment als Vorsteuergröße ausgegeben wird.

Vorteilhafterweise findet kein Eingriff in die Regelungsstruktur statt. Somit bewirkt die Integration der beschriebenen Vorsteuerung keine Instabilität des Antriebes und ermöglicht eine leichte Inbetriebnahme.

Gemäß einer Ausgestaltung wird die mindestens eine prozess-bedingte, zyklische Störung durch einen Stanzprozess, einen Schneideprozess, einen Pressenprozess, einen Druckprozess oder einen Transfer- oder Greifprozess hervorgerufen.

Beispiele für externe Effekte sind bei schneidenden /stanzenden Applikationen das Eintauchen in das Material, bei Druckmaschinen der Druckzylinder mit den Erhebungen des Druckbildes, bei Pressen das Aufsetzen der Presswerkzeuge, bei Fließbändern ein automatisiertes Auflegen von Produkten auf ein Förderband oder eine Bearbeitungsstation.

Beispielsweise hat ferner eine geänderte Prozessgeschwindigkeit beim Schneiden oder Stanzen von Material eine andere externe Schnittkraft zur Folge. Auch ein anderes Material hat eine andere externe Schnittkraft zur Folge. Solche prozessspezifischen Einflüsse werden vorteilhaft berücksichtigt.

Gemäß einer Ausgestaltung weist die Regelungskaskade neben dem Stromregler einen übergeordneten Drehzahlregler auf. Somit wird ein typischer kaskadierter Regler gebildet. Die Stromreglerzeit ist dabei insbesondere kleiner oder gleich des Drehzahlreglers.

Gemäß einer Ausgestaltung weist die Regelungskaskade zusätzlich einen übergeordneten Positionsregler auf. Dieser Regler ist kaskadiert, wobei insbesondere die Positionsreglerzeit größer gleich dem Drehzahlregler und der Drehzahlregler wiederum größer gleich dem Stromregler ist.

Gemäß einer Ausgestaltung wird der Beschleunigungsmoment-Anteil vorgesteuert. Dadurch wird vorteilhaft der Einfluss der Beschleunigung auf das benötigte Drehmoment berücksichtigt. Vorteilhafterweise wird somit das Drehmoment sowohl in Hinblick auf externe Störeffekte, als auch in Hinblick auf eine Beschleunigungsabhängigkeit vorgesteuert und der Regelfehler damit möglichst gering gehalten.

Gemäß einer Ausgestaltung wird der Beschleunigungsmoment-Anteil abhängig von einer Massenträgheit und einer Winkelbeschleunigung ermittelt. Je höher die Beschleunigung, desto mehr Drehmoment ist notwendig, um eine gleiche Masse zu beschleunigen. Muss beispielsweise der Antrieb von A nach B mit einer bestimmten Geschwindigkeit verfahren, so muss dieser auf diese Geschwindigkeit beschleunigen und beim Erreichen der Zielposition abbremsen. Das benötigte Beschleunigungsmoment ist leicht berechenbar über die Massenträgheit und die Winkelbeschleunigung.

Gemäß einer Ausgestaltung wird der Reibmoment-Anteil vorgesteuert. Das Reibmoment ist drehzahlabhängig. Je schneller sich der Motor dreht, desto mehr Reibung entsteht. Für den Reibmoment-Anteil wird entweder eine Soll-Drehzahl verwendet oder eine Ist-Drehzahl gemessen und durch die Drehmoment-Vorsteuerung verwendet.

Gemäß einer Ausgestaltung wird der Reibmoment-Anteil abhängig von einer Geschwindigkeit ermittelt, insbesondere in einer Testfahrt bei mehreren Geschwindigkeitsstufen gemessen. Abhängig von der Geschwindigkeit ändert sich das Reibmoment. Das Reibmoment wird beispielsweise während der Inbetriebnahme eines Antriebes an mehreren Geschwindigkeitsstufen gemessen und dann zwischen den Messpunkten der Geschwindigkeit linearisiert.

Gemäß einer Ausgestaltung wird der Drehmoment-Vorsteuerung ein Ist-Drehmoment zugeführt. Somit wird in vorteilhafter Weise ein relativ einfach ermittelbares Ist-Drehmoment verwendet, um die Vorsteuerung zu realisieren. Die Zuführung erfolgt insbesondere zur Laufzeit. Beispielsweise ist ein Programmbaustein in einem Regelungsprogramm vorgesehen, der beispielsweise in einer PLC zum Einsatz kommt und der das Ist-Drehmoment ausgibt. Beispielsweise besteht das Ist-Drehmoment aus Beschleunigungsmoment und/oder Reibmoment und einem Moment aus externen Effekten. Wird das Reibmoment und das Beschleunigungsmoment abgezogen, bleibt das Moment bedingt durch die externen Effekte, das im nächsten Zyklus vorgesteuert wird. Ist beispielsweise eine Massenträgheit angegeben, wird der Beschleunigungsmoment-Anteil abgezogen. Ist eine Reibkennlinie vorgegeben, wird auch diese abgezogen und nur der Rest der Größe dann entsprechend für die Vorsteuerung des externen Drehmoment-Anteils verwendet.

Gemäß einer Ausgestaltung wird das Ist-Drehmoment in einem ersten Zyklus gemessen und der Drehmoment-Vorsteuerung in einem darauffolgenden Zyklus zugeführt. Somit ist ein schnelles Anpassen der Regelung aufgrund einer erkannten externen Störung ohne Eingriff in das Regelungskonzept oder Anpassung der Reglerparameter umsetzbar.

Gemäß einer Ausgestaltung wird der Drehmoment-Vorsteuerung ein abgeleitetes Drehmoment, welches mittels eines gleitenden Mittelwertes über mehrere aufeinanderfolgende Zyklen gebildet wird, zugeführt. Auf vorteilhafte Weise können so Ausreißer oder nicht vorsteuerbare externe Effekte, die sich in der Messung des Drehmoments bemerkbar machen, verringert werden, ohne maximalen Durchgriff im nächsten Zyklus zu erhalten.

Gemäß einer Ausgestaltung wird der Zyklus auf einer stetig steigenden Größe als Referenz für eine Zyklusvorgabe basierend gebildet. Ein Zyklus kann über eine gewisse Zeit einen Positionsstillstand der vorzusteuernden Achse enthalten, wobei dennoch auf gleicher Position unterschiedliches Drehmoment vorgesteuert werden muss, beispielsweise während Einschwingvorgängen oder Gegendruck während eines Stillstands. Aufgrund der Varianz der Prozessgeschwindigkeit bis hin zu Stillstand wird deshalb statt eines Zyklus mit einer definierten Zeitbasis eine stetig steigende Größe als Referenz zur Zyklusvorgabe genutzt. Ein solcher Referenzwert kann beispielsweise die Leitachse sein, aber auch eine abstrahierte oder imaginäre Größe, beispielsweise ein Zähler.

Gemäß einer Ausgestaltung wird ein Maximalmoment als durch die Drehmoment-Vorsteuerung maximal vorsteuerbares Drehmoment festgelegt. Somit ist ein vorzusteuerndes Maximalmoment anwenderseitig begrenzbar und negative Auswirkungen von Fehler bei der Ausgabe des Vorsteuerungswertes aufgrund von Messfehlern oder anderen Störungen der Vorsteuerung können reduziert werden.

Gemäß einer Ausgestaltung wird die Drehmoment-Vorsteuerung des externen Drehmoment-Anteils, insbesondere die Drehmoment-Vorsteuerung aller vorsteuerbaren Anteile, zugeschaltet und insbesondere ein Ein- oder Ausschalten mit einer steigenden bzw. fallenden Rampe umgesetzt. Somit werden ruckartige Eingriffe vermieden.

Die Erfindung betrifft ferner eine Steuerungseinheit zur Regelung einer technischen Größe, ausgebildet und eingerichtet zur Durchführung des Verfahrens nach einem der vorstehend beschriebenen Ausführungen. Das Programm zur Durchführung des Verfahrens läuft beispielsweise auf einem PC, einer PLC, einem Industrie-PC, einer Antriebssteuerung, etc.

Die Erfindung betrifft ferner ein Computerprogramm, umfassend Befehle, die bei der Ausführung des Programms durch einen Computer diesen veranlassen, das Verfahren nach einem der vorstehend beschriebenen Ausführungen auszuführen, wobei das Computerprogramm insbesondere auf einer virtuellen Steuerung zur Ausführung gebracht wird.

Die Erfindung wird nachfolgend anhand von Ausführungsbeispielen mit Hilfe der Figuren näher erläutert. Es zeigen:
Figur 1 ein Diagramm zur Darstellung von aufgezeichneten Positionen, Geschwindigkeiten und Positionsabweichungen eines Schneidmessers zur Veranschaulichung der Auswirkungen prozessbedingter, zyklischer Störungen;
Figur 2 eine schematische Darstellung eines Regelungsdiagramms gemäß einem Ausführungsbeispiel.

In den Figuren sind funktionsgleiche Elemente mit denselben Bezugszeichen versehen, sofern nichts anderes angegeben ist.

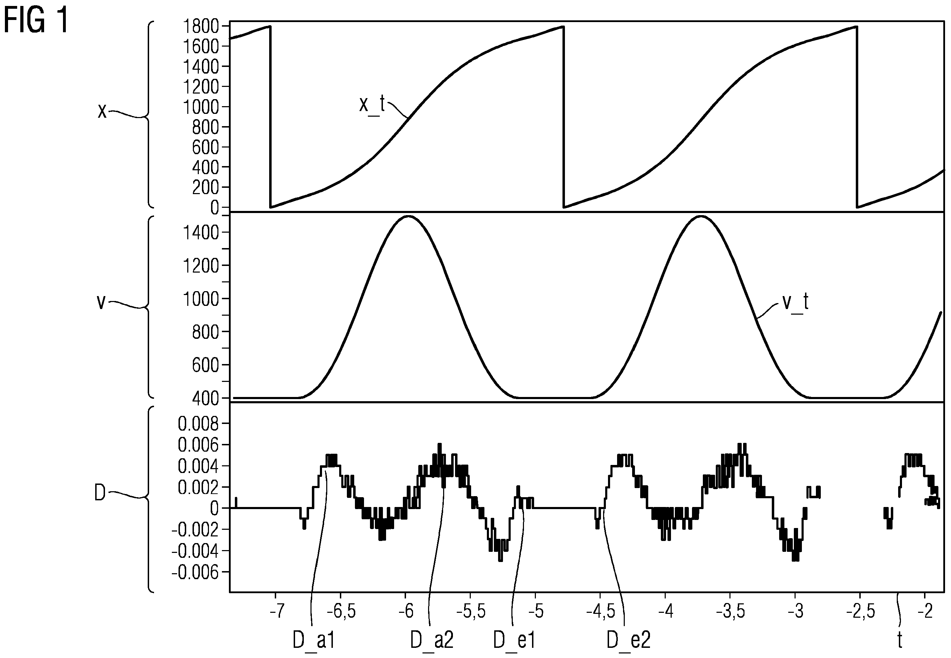

In Figur 1 ist ein Diagramm gezeigt, das im obersten Abschnitt x den Verlauf einer aufgezeichneten Ist-Position x_t über der Zeit t eines rotierenden Schneidewerkzeugs zeigt, das periodisch in ein zu schneidendes Material eintaucht. In Figur 1 werden die Auswirkungen prozessbedingter, zyklischer Störungen in Anwendungsaufbauten gemäß dem Stand der Technik, veranschaulicht. Beispielsweise wird damit Papier oder Folie oder Metall geschnitten. Im mittleren Abschnitt v ist die dazugehörige Ist-Geschwindigkeit v_t im Trace dargestellt. Im untersten Abschnitt D ist die Abweichung zwischen Soll- und Istposition gezeigt. Es ist zu erkennen, dass diese nicht immer gleich 0 ist. In Bereichen einer großen Beschleunigung, zu sehen an den Stellen D_a1 und D_a2, weicht die Istposition von der Sollposition ab. Zudem gibt es auch bei externen Störeffekten, wie hier beim Eintauchen des Messers in das Material, zyklisch Störeffekte, die zu einer Positionsabweichung führen. Im vorliegenden Beispiel macht sich das Eintauchen in und das Austreten aus dem Material als Positionsabweichung D_e1 und D_e2 bemerkbar.

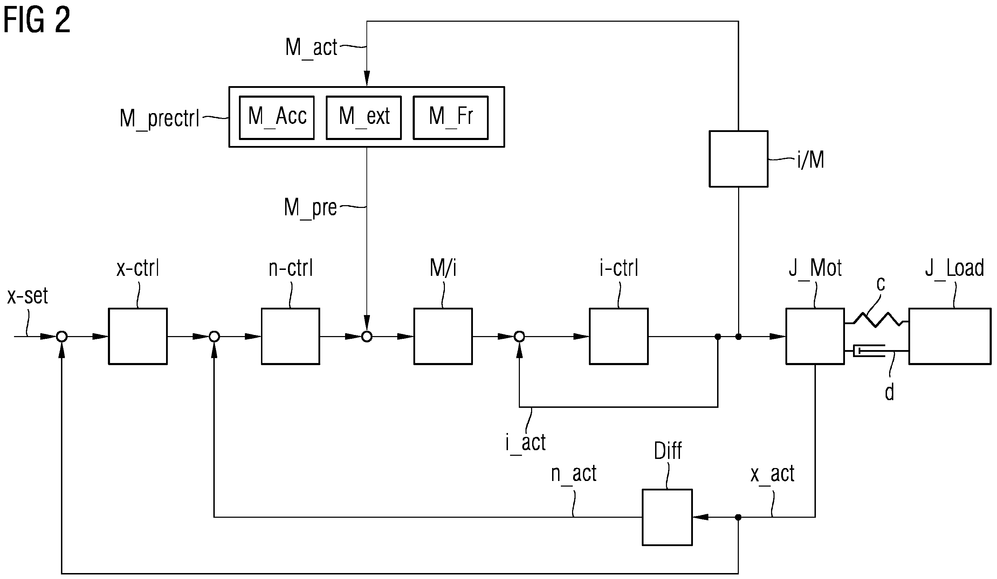

Figur 2 zeigt ein Regelungskonzept gemäß einem Ausführungsbeispiel der Erfindung. Die Mechanik einer zugrundeliegenden Maschine, beispielsweise einer Schneidemaschine zum Zuschnitt von Warenbahnen aus Papier, Stoff o.ä., wird durch das Trägheitsmoment des die Maschine antreibenden Motors J_Mot und das Trägheitsmoment der Last J_Load, die im Modell mittels Feder mit Steifigkeit c und Dämpfungskonstante d gekoppelt sind, beschrieben.

Es ist ein Positionsregler x-ctrl vorgesehen, der die Position des Motors basierend auf einem Positionssollwert x_set und einem Positionsistwert x_act, der mittels eines Gebers ermittelt wird, die Position regelt. Dem Positionsregeler x-ctrl untergeordnet ist ein Drehzahlregler n-ctrl vorgesehen, der den aus dem Positionsistwert x_act mittels Differentiator Diff abgeleiteten Drehzahlistwert n_act als Eingang erhält. Für den Stromregler i-ctrl in der innersten Regelungskaskade wird nun ein Drehmoment vorgesteuert. Dafür wird additiv ein Drehmomentvorsteuerwert M_pre auf den Ausgang des Drehzahlregler n-ctrl gegeben. Mittels M/i-Wandler M/i wird aus dem vorgesteuerten Drehmomentwert und einem zurückgeführten Stromistwert i_act dem Motor ein geeigneter Strom zur Verfügung gestellt.

Das Drehmoment und eine geeignete Drehmomentvorsteuerung kann nach drei Einflussfaktoren gegliedert werden:
1. Beschleunigung: Muss ein Antrieb von A nach B mit einer bestimmten Geschwindigkeit verfahren, so muss dieser auf diese Geschwindigkeit beschleunigen und beim Erreichen der Zielposition abbremsen. Das benötigte Beschleunigungsmoment ist berechenbar über die Massenträgheit und die Winkelbeschleunigung. Eine Vorsteuerung, die den Beschleunigungsmoment-Anteil vorsteuert, hat in dem in Figur 1 gezeigten Trace eine Wirkung auf die Unregelmäßigkeiten D_a1 und D_a2.
2. Reibung: Abhängig von der Geschwindigkeit steigt das Reibmoment. Das Reibmoment kann während der Inbetriebnahme eines Antriebes an mehreren Geschwindigkeitsstufen gemessen und dann zwischen den Messpunkten der Geschwindigkeit linearisiert werden. Eine Vorsteuerung, die den Reibmoment-Anteil vorsteuert, ist in dem in Figur 1 gezeigten Trace bereits aktiv.
3. Externe Effekte von prozess-bedingten, zyklischen Störungen: Externe Effekte lassen sich in Figur 1 an den Unregelmäßigkeiten D_e1 und D_e2 erkennen. Zugehörige Daten, die die externen Effekte beschreiben, liegen einer PLC oder einer Antriebssteuerung nicht vor. Daher wird hier vorteilhaft die beschriebene Vorsteuerung eingesetzt, die auch den externen Drehmomentanteil vorsteuert. Beispielsweise erfährt in einer Applikation für Druckmaschinen die Position des Druckkopfs Abweichungen durch mechanische Stöße durch Erhebungen auf dem Druckzylinder.

Es sind zahlreiche alternative oder zusätzlich auftretende prozess-bedingte, zyklische Störungen durch die Vorsteuerung berücksichtigbar. In schneidenden oder stanzenden Applikationen erzeugt das Eintauchen eines Schneidwerkzeugs in das Material eine plötzliche Kraft, die die Position des Antriebs beeinflusst. Bei eingesetzten Greifarmen zum Aufnehmen von Objekten kann das erstmalige Anfahren oder Berühren eines aufzunehmenden Produkts eine Reaktion im Antrieb erzeugen.

Die Drehmoment-Vorsteuerung M_prectrl ist so ausgestaltet, dass die einzelnen Drehmoment-Anteile M_Acc, M_ext, M_Fr durch Parametrierung zu- und abschaltbar sind. Beispielsweise wird lediglich der durch prozess-bedingte, zyklische Störung verursachte externe Drehmomentanteil M_ext vorgesteuert, oder es werden Kombinationen des externen Drehmomentanteils mit dem Beschleunigungsmoment-Anteil und/oder dem Reibmoment-Anteil vorgesteuert. Bei Aktivierung aller drei Einflussfaktoren werden die einzelnen Drehmoment-Anteile M_Acc, M_ext, M_Fr summiert und es wird ein daraus ermittelter Wert M_pre als Drehmomentvorsteuerwert von der Drehmoment-Vorsteuerung M_prectrl ausgegeben.

Das Ist-Drehmoment M_act wird beispielsweise vor dem Motor aus dem Stromistwert i_act mittels i/M-Wandler i/M ermittelt und zur Laufzeit am Eingang der Drehmoment-Vorsteuerung M_prectrl als Eingang zugeführt.

Messungen des Drehmoments, die für das Vorsteuern vorgenommen werden, unterliegen Ungenauigkeiten. Gemäß dem Ausführungsbeispiel werden im Baustein, der die Vorsteuerung in der Steuerung des Motors realisiert, Filter vorgesehen. Beispielsweise sind Ausreißer und auch nicht vorsteuerbare, nicht-zyklische externe Störungen in der Messung des Drehmoments möglich, welche nicht zu einem maximalen Durchgriff im nächsten Zyklus führen sollen. Daher wird ein gemitteltes Drehmoment, welches über einen gleitenden Mittelwert über mehrere Perioden gebildet wird, als Vorsteuergröße genutzt.

Im Baustein können Anwender das Maximalmoment, welches vorgesteuert werden darf, angeben. Somit ist immer eine maximale Begrenzung vorgebbar, unabhängig von Messungen des Systems.

Der Baustein weist vorteilhaft neben der reinen Vorsteuerung noch weitere Modi auf, sodass der Nutzer die Möglichkeit hat, vor der eigentlichen Vorsteuerung die Datenqualität zu beurteilen. Folgende Modi sind gemäß dem Ausführungsbeispiel implementiert:
1. Ein Modus zum Messen der Vorsteuergröße,
2. Ein Modus zum lernenden Vorsteuern (Messen und Vorsteuern)
3. Ein manueller Modus, bei welchem der Anwender die vorzusteuernde Größe selbst vorgeben kann.

Eine Größe, welche durch Berechnung einfach vorgesteuert werden kann, muss nicht aufwändig gemessen werden. Somit wird vorteilhafterweise im Baustein für die Beschleunigungsmomentvorsteuerung ein Sollwert berechnet und vorgegeben.

Oftmals ist es in Anwendungen gewünscht, dass nicht 100% des Drehmoments vorgesteuert wird. Daher ist ein Skalierungsfaktor notwendig, welcher die Vorsteuergröße beispielsweise relativ zwischen 0% und 200% anpassen lässt. Dabei ist die Anpassung insbesondere dynamisch zu jedem Zeitpunkt möglich sein, beispielsweise um ein "Losbrechmoment" des Antriebes, ein maximal notwendiges Drehmoment, um eine bestehende Haftverbindung zwischen Stator- und Rotorteilen zu trennen, zu gewährleisten.

Der Ein- und Ausschaltvorgang der Vorsteuerung oder einzelner Anteile der Drehmomentvorsteuerung M_prectrl wird mit einer steigenden oder fallenden Rampe realisiert werden. Somit wird ein ruckartiger Eingriff vermieden.

## Patentansprüche

1. Verfahren zur Regelung einer technischen Größe, aufweisend die folgenden Schritte:
- Bereitstellen einer Regelungskaskade mit zumindest einem Stromregler (i-ctr) im Innersten der Regelungskaskade,
- Eingreifen einer Drehmoment-Vorsteuerung (M_prectrl) am Eingang des Stromreglers (i-ctrl), wobei ein Beschleunigungsmoment-Anteil (M_Acc) und/oder ein Reibmoment-Anteil (M_Fr) vorsteuerbar sind und ein ermittelter externer Drehmoment-Anteil (M_ext) vorgesteuert wird, wobei der externe Drehmoment-Anteil (M_ext) mindestens eine prozessbedingte, zyklische Störung vorsteuert.

2. Verfahren nach Anspruch 1, wobei die mindestens eine prozess-bedingte, zyklische Störung durch einen Stanzprozess, einen Schneideprozess, einen Pressenprozess, einen Druckprozess oder einen Transfer- oder Greifprozess hervorgerufen wird.

3. Verfahren nach Anspruch 1 oder 2, wobei die Regelungskaskade neben dem Stromregler (i-ctrl) einen übergeordneten Drehzahlregler (n-ctrl) aufweist.

4. Verfahren nach einem der vorstehenden Ansprüche, wobei die Regelungskaskade zusätzlich einen übergeordneten Positionsregler (x-ctrl) aufweist.

5. Verfahren nach einem der vorstehenden Ansprüche, wobei der Beschleunigungsmoment-Anteil (M_Acc) vorgesteuert wird.

6. Verfahren nach Anspruch 5, wobei der Beschleunigungsmoment-Anteil (M_Acc) abhängig von einer Massenträgheit und einer Winkelbeschleunigung ermittelt wird.

7. Verfahren nach einem der vorstehenden Ansprüche, wobei der Reibmoment-Anteil (M_Fr) vorgesteuert wird.

8. Verfahren nach Anspruch 7, wobei der Reibmoment-Anteil (M_Fr) abhängig von einer Geschwindigkeit ermittelt wird, insbesondere in einer Testfahrt bei mehreren Geschwindigkeitsstufen gemessen wird.

9. Verfahren nach einem der vorstehenden Ansprüche, wobei der Drehmoment-Vorsteuerung (M_prectrl) ein Ist-Drehmoment (M_act) zugeführt wird.

10. Verfahren nach Anspruch 9, wobei das Ist-Drehmoment (M_act) in einem ersten Zyklus gemessen und in einem darauffolgenden Zyklus der Drehmoment-Vorsteuerung (M_prectrl) zugeführt wird.

11. Verfahren nach Anspruch 9 oder 10, wobei der Drehmoment-Vorsteuerung (M_prectrl) ein abgeleitetes Drehmoment, welches mittels eines gleitenden Mittelwertes über mehrere aufeinanderfolgende Zyklen gebildet wird, zugeführt wird.

12. Verfahren nach Anspruch 10 oder 11, wobei der Zyklus auf einer stetig steigenden Größe als Referenz für eine Zyklusvorgabe basierend gebildet wird.

13. Verfahren nach einem der vorstehenden Ansprüche, wobei ein Maximalmoment als durch die Drehmoment-Vorsteuerung (M_prectrl) maximal vorsteuerbares Drehmoment festgelegt wird.

14. Verfahren nach einem der vorstehenden Ansprüche, wobei die Drehmoment-Vorsteuerung des externen Drehmoment-Anteils, insbesondere die Drehmoment-Vorsteuerung aller vorsteuerbaren Anteile, zugeschaltet wird und insbesondere ein Ein- oder Ausschalten mit einer steigenden bzw. fallenden Rampe umgesetzt wird.

15. Steuerungseinheit zur Regelung einer technischen Größe, ausgebildet und eingerichtet zur Durchführung des Verfahrens nach einem der vorstehenden Ansprüche.

16. Computerprogramm, umfassend Befehle, die bei der Ausführung des Programms durch einen Computer diesen veranlassen, das Verfahren nach einem der Ansprüche 1 bis 14 auszuführen, wobei das Computerprogramm insbesondere auf einer virtuellen Steuerung zur Ausführung gebracht wird.
